# EUROPEAN PATENT SPECIFICATION

(11) **EP 2 469 804 B1**
(45) Date of publication and mention of the grant of the patent: **12.09.2012**
(21) Application number: 10192017.1
(22) Date of filing: 22.11.2010
(51) Int. Cl.: H04M 1/02

(54) **Multi-display mobile device**
Mobile Vorrichtung mit Mehrfachanzeige
Dispositif mobile à affichages multiples

(43) Date of publication of application: 27.06.2012
(73) Proprietor: Research In Motion Limited, Waterloo, ON N2L 3W8 (CA)
(72) Inventor: Pegg, Albert, Waterloo Ontario N2L 3W8 (CA)
(74) Representative: Moore, Barry

(56) References cited:
- WO-A1-2004/054210
- WO-A1-2007/012235
- WO-A2-2009/013690
- US-A1- 2007 146 977
- US-A1- 2008 261 666

## Description

Embodiments disclosed herein relate generally to mobile devices, and more particularly to mobile devices comprising a plurality of displays.

Some known mobile devices are provided with multiple displays. For example, some flip-style mobile devices may provide an exterior display and an interior display. The interior display is typically hidden when the mobile device is flipped closed.

In WO2007/012235 there is described a mobile telephone with slider and flip cover comprising a screen; a slider on the surface of the screen; and a flip cover on the slider; when the slider is slid out, configures the number keys and the first function keys on one surface of the flip cover; when the flip cover is flipped over, the other surface of the flip cover and the slider constitute the letter keys and the second function keys together. In W02009/013690 there is described a portable handheld electronic apparatus adapted to be folded along a first axis and a second axis perpendicular to each other, which divide the apparatus into four quadrants interconnected by hinges; said axes being orthogonal to each other and coincident with the axes of rotation of the hinges. These quadrants may comprise multiple displays and input keypads or keyboards.

### GENERAL

In at least some embodiments described herein, there may be provided a mobile device comprising a first portion slidably coupled to a second portion, wherein at least one part of the first potion is foldable with respect to at least one part of the second portion such that the mobile device resembles a picture frame comprising multiple digital displays.

In one broad aspect, there may be provided a mobile device. The mobile device may comprise a first portion and a second portion. The first portion may comprise a first part providing at least a first display screen, and a second part providing at least a second display screen. The first part may be foldably coupled to the second part to allow the first part to fold with respect to the second part about a first folding axis. The second portion may comprise a third part providing at least a third display screen. The first portion may be slidably coupled to the second portion and at least one of the first portion and the second portion comprises one or more coupling elements configured so that the second part of the first portion is foldable with respect to the third part of the second portion about a second folding axis.

In another broad aspect, at least two of (i) an edge of the first part, (ii) an edge of the second part, and (iii) an edge of the third part may lie in a same plane. At least one of the first folding axis and the second fo!ding axis may be normal to the same plane. In some embodiments, all three of the edge of the first part, the edge of the second part and the edge of the third part may lie in the same plane.

In another broad aspect, the first portion may comprise a hinge that foldably couples the first part to the second part.

In another broad aspect, the one or more coupling elements may comprise a hinge that foldably couples the second part of the first portion to the third part of the second portion. In one embodiment, the second part may provide a contact surface configured to abut the third part and to stop the second part from folding about the second folding axis with respect to the third part, after a predetermined fold angle between the second part and the third part is obtained. The second part may provide a beveled edge, and the beveled edge may comprise the contact surface. In another embodiment, the second part may provide a contact surface configured to mate with an indent in the second portion and to stop the second part from folding about the second folding axis with respect to the third part, after a predetermined fold angle between the second part and the third part is obtained.

In another broad aspect, the first portion may be configured to slide relative to the second portion between at least a first position and a second position. When in the first position, the third display screen may be covered by the first portion, whereas in the second position, the third display screen may be at least partially exposed by the first portion.

In another broad aspect, each of the first part, the second part, and the third part may comprise a respective front surface. The first display screen may be on the front surface of the first part, the second display screen may be on the front surface of the second part, and the third display screen may be on the front surface of the third part. The first part may be configured to fold with respect to the second part about the first folding axis such that the front surface of the first part moves towards the front surface of the second part. The second part may be configured to fold with respect to the third part about a second folding axis in the second position such that the front surface of the second part moves towards the front surface of the third part.

In another broad aspect, in the second position, the respective front surfaces of the first, second and third parts may form a concave "U"-like shape, with the respective front surfaces of the first, second and third parts on the interior of the concave "U"-like shape.

In another broad aspect, the first portion may be configured to slide with respect to the second portion in a slide direction which is perpendicular to at least one of the first folding axis and the second folding axis.

### Brief Description of the Drawings

Embodiments are described in further detail below, by way of example only, with reference to the accompanying drawings, in which:
**FIG. 1** is a block diagram of a mobile device in one example implementation;
**FIG. 2** is a block diagram of a communication subsystem component of the mobile device of **FIG. 1**;
**FIG. 3** is a block diagram of a node of a wireless network;
**FIG. 4A** is a perspective view of a mobile device according to one example embodiment, wherein a first portion is in a first position;
**FIG. 4B** is a perspective view of a mobile device according to a variant embodiment, wherein a first portion is in a first position;
**FIG. 5A** is a perspective view of the mobile device of **FIG. 4A****,** wherein the first portion is in a second position;
**FIG. 5B** is a perspective view of the mobile device of **FIG. 4B****,** wherein the first portion is in a second position;
**FIG. 6A** is a perspective view of the mobile device of **FIGS. 4A** and **5A** according to one example embodiment, wherein parts of the first portion are folded;
**FIG. 6B** is a perspective view of the mobile device of **FIGS. 4B** and **5B** according to one example embodiment, wherein parts of the first portion are folded;
**FIG. 6C** is a perspective view of the mobile device of **FIGS. 4A** and **5A** according to another example embodiment, wherein parts of the first portion and the second portion are folded;
**FIGS. 6D** to **6F** illustrate views of the mobile device of **FIGS. 4A** and **5A** according to another example embodiment;
**FIG. 7** is a perspective view of a mobile device according to another example embodiment, wherein a first portion is in a second position;
**FIG. 8** is a perspective view of the mobile device of **FIG. 7****,** wherein parts of the first portion are folded;
**FIG. 9** is a perspective view of a mobile device according to another example embodiment, wherein a first portion is in a first position;
**FIG. 10** is a perspective view of the mobile device of **FIG. 9** wherein the first portion is in a second position;
**FIG. 11** is a perspective view of the mobile device of **FIG. 10** wherein parts of the first portion and a second portion are folded;
**FIG. 12** is a perspective view of a mobile device according to another example embodiment, wherein parts of a first and of a second portion are folded;
**FIG. 13** is a perspective view of a mobile device according to another example embodiment, wherein a first portion is in a second position;
**FIG. 14** is a perspective view of the mobile device of **FIG. 13** wherein certain parts of the first portion and of a second portion are folded;
**FIG. 15** is a perspective view of the mobile device of **FIG. 13** wherein certain parts of the first and second portions are folded;
**FIG. 16** is a perspective view of the mobile device of **FIG. 13** wherein certain parts of the first and second portions are folded; and
**FIG. 17** is a perspective view of the mobile device of **FIG. 13** wherein certain parts of the first and second portions are folded.

### Detailed Description

Some embodiments of the system and methods described herein make reference to a mobile device. A mobile device may be a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. A mobile device may communicate with other devices through a network of transceiver stations.

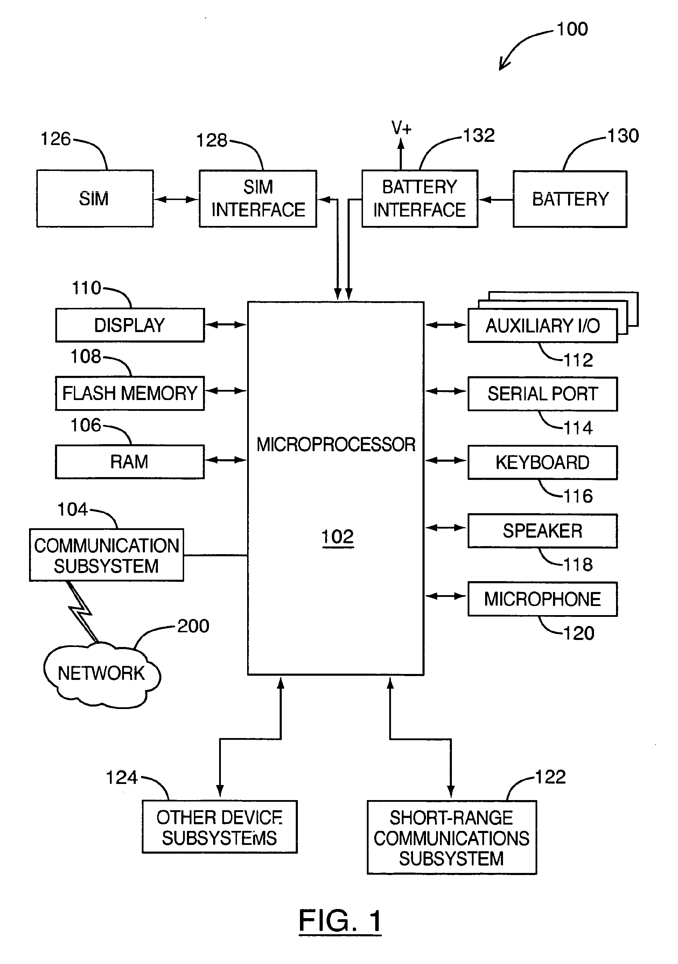

To aid the reader in understanding the structure of a mobile device and how it communicates with other devices, reference is made to **FIGS. 1** through **3****.**

Referring first to **FIG. 1****,** a block diagram of a mobile device in one example implementation is shown generally as **100.** Mobile device **100** comprises a number of components, the controlling component being microprocessor **102.** Microprocessor **102** controls the overall operation of mobile device **100.** Communication functions, including data and voice communications, may be performed through communication subsystem **104.** Communication subsystem **104** may be configured to receive messages from and send messages to a wireless network **200.** In one example implementation of mobile device **100,** communication subsystem **104** may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem **104** with network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device **100** is a GSM/GPRS wireless network in one example implementation of mobile device **100,** other wireless networks may also be associated with mobile device **100** in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN™), Evolution-Data Optimized (EV-DO), and High Speed Packet Access (HSPA), etc.

Microprocessor **102** may also interact with additional subsystems such as a Random Access Memory (RAM) **106,** flash memory **108,** display **110,** auxiliary input/output (I/O) subsystem **112**, serial port **114**, keyboard **116**, speaker **118**, microphone **120**, short-range communications subsystem **122** and other device subsystems **124**.

Some of the subsystems of mobile device **100** perform communication-related functions, whereas other subsystems may provide "resident" or on-device functions. By way of example, display **110** and keyboard **116** may be used for both communication-related functions, such as entering a text message for transmission over network **200**, as well as device-resident functions such as a calculator or task list. Operating system software used by microprocessor **102** is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM **106.**

Mobile device **100** may send and receive communication signals over network **200** after network registration or activation procedures have been completed. Network access may be associated with a subscriber or user of a mobile device **100.** To identify a subscriber, mobile device **100** may provide for a Subscriber Identity Module ("SIM") card **126** to be inserted in a SIM interface **128** in order to communicate with a network. SIM **126** may be one example type of a conventional "smart card" used to identify a subscriber of mobile device **100** and to personalize the mobile device **100,** among other things. Without SIM **126,** mobile device **100** may not be fully operational for communication with network **200.** By inserting SIM **126** into SIM interface **128,** a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM **126** may include a processor and memory for storing information. Once SIM **126** is inserted in SIM interface **128,** it may be coupled to microprocessor **102.** In order to identify the subscriber, SIM **126** may contain some user parameters such as an International Mobile Subscriber Identity (IMSI). By using SIM **126,** a subscriber may not necessarily be bound by any single physical mobile device. SIM **126** may store additional subscriber information for a mobile device as well, including datebook (or calendar) information and recent call information.

Mobile device **100** may be a battery-powered device and may comprise a battery interface **132** for receiving one or more rechargeable batteries **130.** Battery interface **132** may be coupled to a regulator (not shown), which assists battery **130** in providing power V+ to mobile device **100.** Although current technology makes use of a battery, future technologies such as micro fuel cells may provide power to mobile device **100.** In some embodiments, mobile device **100** may be solar-powered.

Microprocessor **102,** in addition to its operating system functions, enables execution of software applications on mobile device **100.** A set of applications that control basic device operations, including data and voice communication applications, may be installed on mobile device **100** during its manufacture. Another application that may be loaded onto mobile device **100** is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network **200.** PIM data items may be seamlessly integrated, synchronized, and updated via wireless network **200** with the mobile device subscriber's corresponding data items stored and/or associated with a host computer system. This functionality may create a mirrored host computer on mobile device **100** with respect to such items. This can be particularly advantageous where the host computer system is the mobile device subscriber's office computer system.

Additional applications may also be loaded onto mobile device **100** through network **200,** auxiliary I/O subsystem **112,** serial port **114,** short-range communications subsystem **122,** or any other suitable subsystem **124.** This flexibility in application installation increases the functionality of mobile device **100** and may provide enhanced on-device functions, communication-related functions, or both. For example, secure communication applications may enable electronic commerce functions and other such financial transactions to be performed using mobile device **100.**

Serial port **114** enables a subscriber to set preferences through an external device or software application and extends the capabilities of mobile device **100** by providing for information or software downloads to mobile device **100** other than through a wireless communication network. The alternate download path may, for example, be used to load an encryption key onto mobile device 100 through a direct and thus reliable and trusted connection to provide secure device communication.

Short-range communications subsystem **122** provides for communication between mobile device **100** and different systems or devices, without the use of network **200.** For example, subsystem **122** may include an infrared device and associated circuits and components for short-range communication. Examples of short range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download is processed by communication subsystem **104** and input to microprocessor **102.** Microprocessor **102** then processes the received signal for output to display **110** or alternatively to auxiliary I/O subsystem **112.** A subscriber may also compose data items, such as e-mail messages, for example, using keyboard 116 in conjunction with display **110** and possibly auxiliary I/O subsystem **112.** Auxiliary subsystem **112** may include devices such as: a touch screen, mouse, track ball, optical trackpad infrared fingerprint detector, or a roller wheel with dynamic button pressing capability. Keyboard 116 may comprise an alphanumeric keyboard and/or telephone-type keypad, for example. A composed item may be transmitted over network **200** through communication subsystem **104.**

For voice communications, the overall operation of mobile device **100** may be substantially similar, except that the received signals may be processed and output to speaker **118,** and signals for transmission may be generated by microphone **120.** Alternative voice or audio I/O subsystems, such as a voice message recording subsystem, may also be implemented on mobile device **100.** Although voice or audio signal output is accomplished primarily through speaker **118,** display **110** may also be used to provide additional information such as the identity of a calling party, duration of a voice call, or other voice call related information.

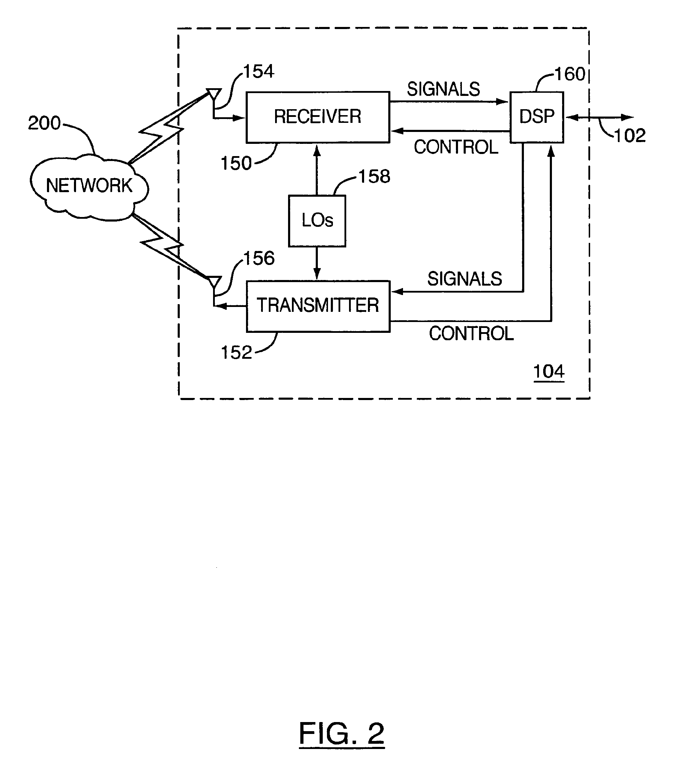

Referring now to **FIG. 2****,** a block diagram of the communication subsystem component **104** of **FIG. 1** is shown. Communication subsystem **104** may comprise a receiver **150,** a transmitter **152,** one or more embedded or internal antenna elements **154, 156,** Local Oscillators (LOs) **158,** and a processing module such as a Digital Signal Processor (DSP) 160.

The particular design of communication subsystem **104** is dependent upon the network **200** in which mobile device **100** is intended to operate; thus, it should be understood that the design illustrated in **FIG. 2** serves only as one example. Signals received by antenna **154** through network **200** are input to receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP **160.** In a similar manner, signals to be transmitted are processed, including modulation and encoding, by DSP **160.** These DSP-processed signals are input to transmitter **152** for digital-to-analog (D/A) conversion, frequency up conversion, filtering, amplification and transmission over network **200** via antenna **156.** DSP **160** not only processes communication signals, but also provides for receiver and transmitter control. For example, the gains applied to communication signals in receiver **150** and transmitter **152** may be adaptively controlled through automatic gain control algorithms implemented in DSP **160.**

The wireless link between mobile device **100** and a network **200** may contain one or more different channels, typically different RF channels, and associated protocols used between mobile device **100** and network **200.** A RF channel is generally a limited resource, typically due to limits in overall bandwidth and limited battery power of mobile device **100.**

When mobile device **100** is fully operational, transmitter **152** may be typically keyed or turned on only when it is sending to network **200** and may otherwise be turned off to conserve resources. Similarly, receiver **150** may be periodically turned off to conserve power until it is needed to receive signals or information (if at all) during designated time periods.

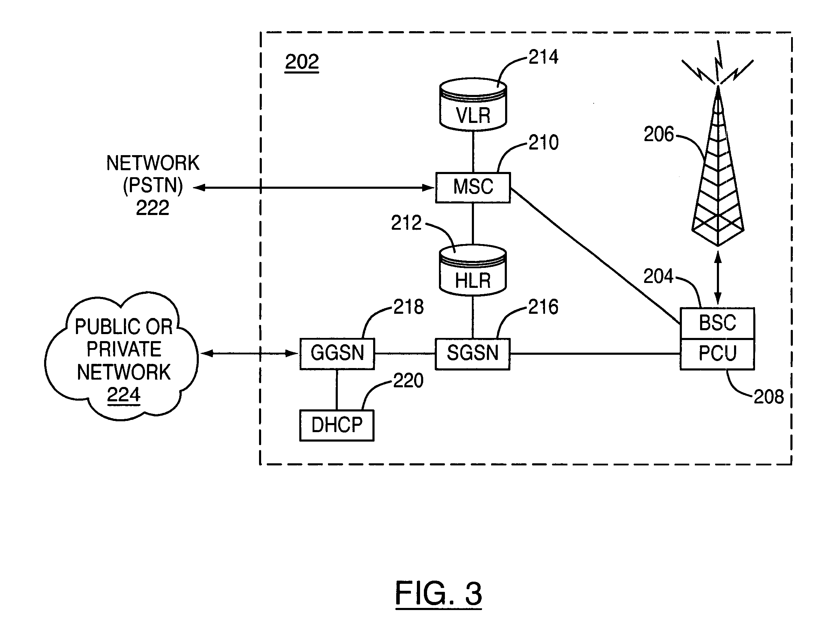

Referring now to **FIG. 3****,** a block diagram of a node of a wireless network is shown as **202.** In practice, network **200** comprises one or more nodes **202.** Mobile device **100** communicates with a node 202 within wireless network **200.** In the example implementation of **FIG. 3****,** node **202** is configured in accordance with GPRS and GSM technologies; however, in other embodiments, different standards may be implemented as discussed in more detail above. Node **202** includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) server **220.** This list of components is not meant to be an exhaustive list of the components of every node **202** within a GSM/GPRS network, but rather a list of components that are commonly used in communications through network **200.**

In a GSM network, MSC **210** is coupled to BSC **204** and to a landline network, such as a Public Switched Telephone Network (PSTN) **222** to satisfy circuit switched requirements. The connection through PCU **208,** SGSN **216** and GGSN **218** to the public or private network (Internet) **224** (also referred to herein generally as a shared network infrastructure) represents the data path for GPRS capable mobile devices. In a GSM network extended with GPRS capabilities, BSC **204** also contains a Packet Control Unit (PCU) **208** that connects to SGSN **216** to control segmentation, radio channel allocation and to satisfy packet switched requirements. To track mobile device location and availability for both circuit switched and packet switched management, HLR **212** is shared between MSC **210** and SGSN **216.** Access to VLR **214** is controlled by MSC **210.**

Station **206** may be a fixed transceiver station. Station **206** and BSC 204 together may form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station **206.** The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile may be stored in HLR **212.** HLR **212** may also contain location information for each registered mobile device and can be queried to determine the current location of a mobile device. MSC **210** is responsible for a group of location areas and stores the data of the mobile devices currently in its area of responsibility in VLR **214.** Further VLR **214** also contains information on mobile devices that are visiting other networks. The information in VLR **214** includes part of the permanent mobile device data transmitted from HLR **212** to VLR **214** for faster access. By moving additional information from a remote HLR **212** node to VLR **214,** the amount of traffic between these nodes can be reduced so that voice and data services can be provided with faster response times while requiring less use of computing resources.

SGSN **216** and GGSN **218** are elements that may be added for GPRS support; namely packet switched data support, within GSM. SGSN **216** and MSC **210** have similar responsibilities within wireless network **200** by keeping track of the location of each mobile device **100.** SGSN **216** also performs security functions and access control for data traffic on network **200.** GGSN **218** provides internetworking connections with external packet switched networks and connects to one or more SGSNs **216** via an Internet Protocol (IP) backbone network operated within the network **200.** During normal operations, a given mobile device **100** performs a "GPRS Attach" to acquire an IP address and to access data services. This normally is not present in circuit switched voice channels as Integrated Services Digital Network (ISDN) addresses may be generally used for routing incoming and outgoing calls. Currently, GPRS capable networks may use private, dynamically assigned IP addresses, thus requiring a DHCP server **220** connected to the GGSN **218.** There are many mechanisms for dynamic IP assignment, including using a combination of a Remote Authentication Dial-In User Service (RADIUS) server and DHCP server, for example. Once the GPRS Attach is complete, a logical connection is established from a mobile device **100,** through PCU **208,** and SGSN **216** to an Access Point Node (APN) within GGSN **218,** for example. The APN represents a logical end of an IP tunnel that can either access direct Internet compatible services or private network connections. The APN also represents a security mechanism for network **200,** insofar as each mobile device **100** must be assigned to one or more APNs and mobile devices **100** cannot generally exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, network **200** will run an idle timer for each PDP Context to determine if there is a lack of activity. When a mobile device **100** is not using its PDP Context, the PDP Context can be deallocated and the IP address returned to the IP address pool managed by DHCP server **220.**

In another broad aspect, the second portion may further comprise a fourth part, which provides at least a fourth display screen. The first portion may be configured to slide relative to the second portion between at least a first position and a second position; wherein in the first position, the third and fourth display screens are covered by the first portion; and wherein in the second position, at least one of the third and fourth display screens is at least partially exposed by the first portion. The third part of the second portion may be foldably coupled to the fourth part of the second portion to allow the third part to fold with respect to the fourth part about a third folding axis. In one embodiment, the second portion may comprise a hinge that foldably couples the third part to the fourth part.

In another broad aspect, each of the first part, the second part, the third part and the fourth part may comprise a respective front surface. The first display screen may be on the front surface of the first part, the second display screen may be on the front surface of the second part, the third display screen may be on the front surface of the third part, and the fourth display screen may be on the front surface of the fourth part.

In another broad aspect, the first part may be configured to fold with respect to the second part about the first folding axis such that the front surface of the first part moves towards the front surface of the second part. In the second position, the second part may be configured to fold with respect to the fourth part about a second folding axis. The third part may be configured to fold with respect to the fourth part about the third folding axis such that the front surface of the third part moves towards the front surface of the fourth part.

In another broad aspect, the second part may be configured to fold with respect to the fourth part about the second folding axis in the second position such that the front surface of the second part moves away from the front surface of the fourth part, and such that the respective front surfaces of the first, second, third, and fourth parts form a "W"-like shape, with the respective front surfaces of the first, second, third and fourth parts on the interior of the "W"-like shape.

In another broad aspect, the third display screen may provide a display area that is larger than a display area of each of the first display screen and the second display screen.

In another broad aspect, each of the first portion and the second portion may comprise a respective front surface, wherein the front surface of the first portion and the front surface of the second portion are substantially equal in area.

In another broad aspect, at least one of the first, second and third display screens may comprise a touch screen.

In another broad aspect, at least one of the first, second and third display screens may be configured to accept touch screen input when the first portion is in one of the first and second positions, but to not accept touch screen input when the first portion is in one other of the first and second positions.

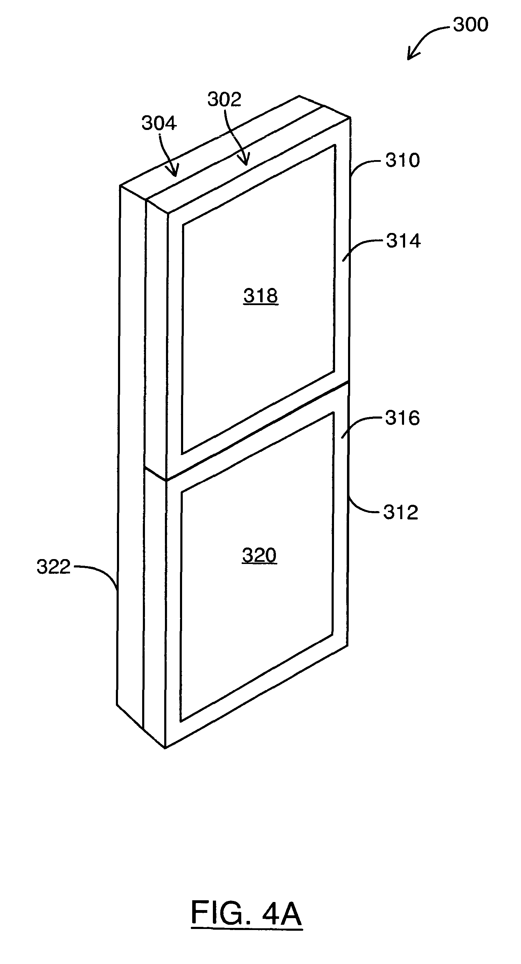

Referring now to **FIGS. 4A****,** **5A** and **6A****,** a perspective view of a mobile device **300** is shown, according to one example embodiment. The mobile device **300** may be the same kind of device as the mobile device **100** described above. The mobile device **300** comprises a first portion **302** and a second portion **304,** each having a respective front surface **306, 308.** The first portion **302** comprises at least a first part **310** and a second part **312.** The first part **310** comprises a front surface **314** on which at least a first display screen **318** is provided. The second part **312** comprises a front surface **316** on which at least a second display screen **320** is provided. Similarly, the second portion **304** comprises at least a third part **322** with a front surface **324** on which at least a third display screen **326** is provided.

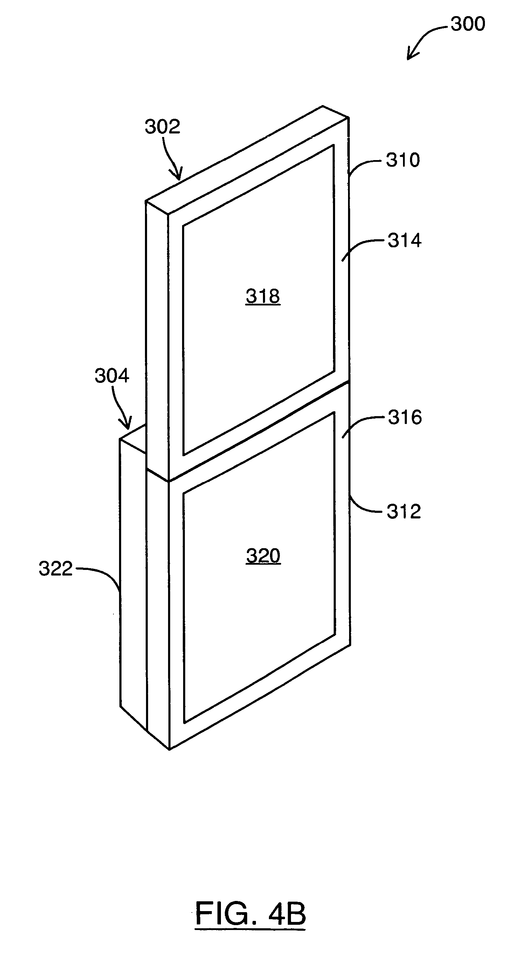

In the example embodiment illustrated with reference to **FIGS. 4A****,** **5A** and **6A****,** the first portion **302** and the second portion **304** may be of the same width and height as shown in **FIG. 4A****.** However, in some embodiments, the width and/or height of the first portion **302** may different from the width and/or height of the second portion **304.** For example, **FIGS. 4B****,** **5B** and **6B** illustrate a perspective view of the mobile device **300** in accordance with another example embodiment, in which the height of the second portion **304** is shortened relative to the first portion **302.** For ease of exposition, features of the example embodiment of **FIGS. 4A****,** **5A** and **6A** are described herein in greater detail, although persons skilled in the art will understand that the described features will also apply to the example embodiment of **FIGS. 4B****,** **5B****,** and **6B****.**

The thickness of the first portion **302** may or may not be different from the thickness of the second portion **304.** The thickness of a given portion may depend on the type of components housed by that portion (e.g. a battery). For example, a battery compartment and/or SIM card compartment may be provided on the underside of the second portion **304.**

In **FIG. 4A****,** the first portion **302** is in a first position. In this first position, the user may interact with the display screens **318** and **320.** For example, one display screen may be used to accept user input (e.g. a virtual keyboard may be provided on a touch screen), while the other display screen is used to view output of the mobile device 300. Alternatively, both display screens may be configured to provide output to the user. Other configurations may be possible.

As a further example, in this first position, the user may view a web page on one display screen while composing an e-mail message at the same time on a different display screen, or an initial message can be viewed in one display screen while a response is composed in another display screen

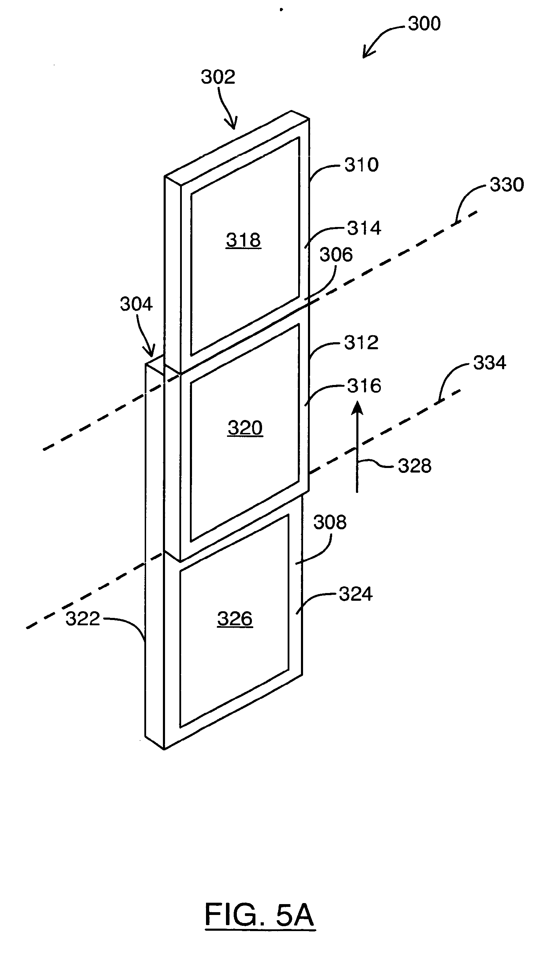

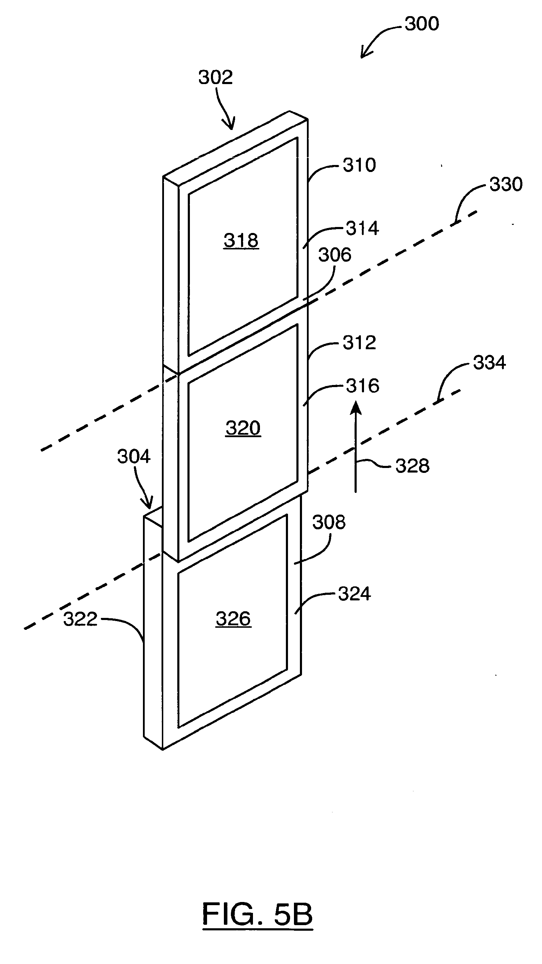

In the first position, the first portion **302** is positioned in front of the second portion **304** and completely covers the third display screen **326** (**FIG. 5A**). The first portion **302** is slidably coupled to the second portion **304** such that the first portion **302** can slide in a slide direction **328** to a second position (shown in **FIG. 5A**) to at least partially expose the third display screen **326.**

In one embodiment, the third display screen **326** is fully exposed when the first portion **302** is in the second position. Slidably coupling the first portion **302** to the second portion **304** may permit the mobile device **300** to selectively take on a more compact form for transportation and storage.

In the second position, the user may interact with the three display screens **318, 320, 326** simultaneously, which may facilitate multitasking. For example, one display screen may be used to accept user input (e.g. a virtual keyboard may be provided on a touch screen), while the other two display screens may be used to view output of the mobile device **300.** Alternatively, all three display screens may be configured to provide output to the user. Other configurations may be possible.

As a further example, in this first position, the user may view a web page on one display screen while composing an e-mail message at the same time on a different display screen, or an initial message can be viewed in one display screen while a response is composed in another display screen. The user may interact with a different application on the third display screen.

The coupling (not shown) which permits the first portion **302** to slide with respect to the second portion **304** may be one that is known in the art. For example, there may be projections provided by one of the first and second portions **302, 304** which cooperate with tracks provided by the other of the first and second portions **302, 304** to direct the sliding motion of first portion **302** over the second portion **304.** In some embodiments, projections and tracks may be provided on each of the first and second portions **302, 304,** with the projections on one portion **302, 304** cooperating with tracks on the other portion **302, 304.** The sliding mechanism may also be configured to limit the range in which first portion **302** is permitted to slide over second portion **304.** For example, first portion **302** may only be permitted to slide a pre-determined distance after third display screen **326** is fully exposed (see e.g. **FIG. 5A**). Other sliding mechanisms may be employed in variant implementations.

The mobile device **300** is also configured to allow certain parts **310, 312, 322** to fold with respect to one another after the first portion **302** slides to the second position shown in **FIG. 5A****.**

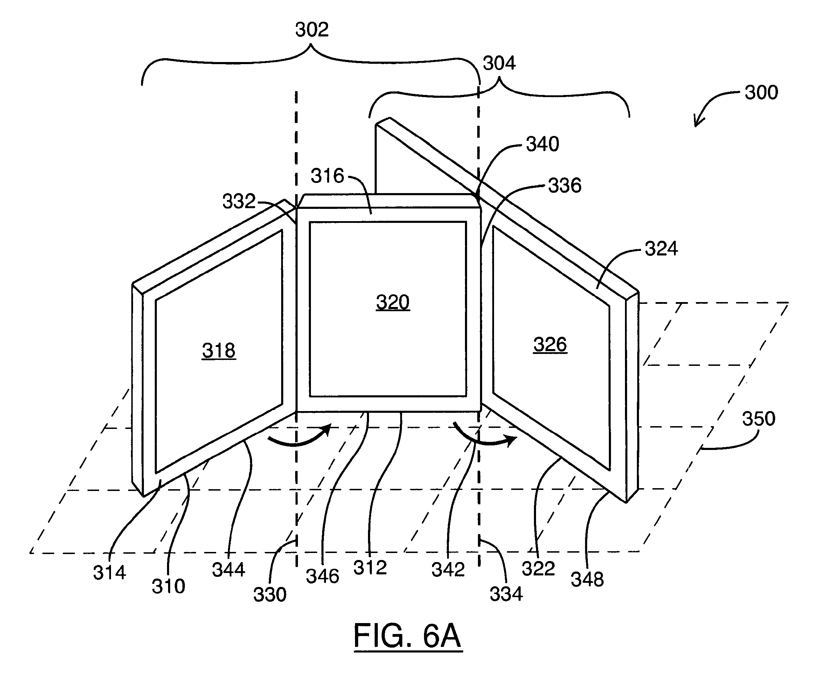

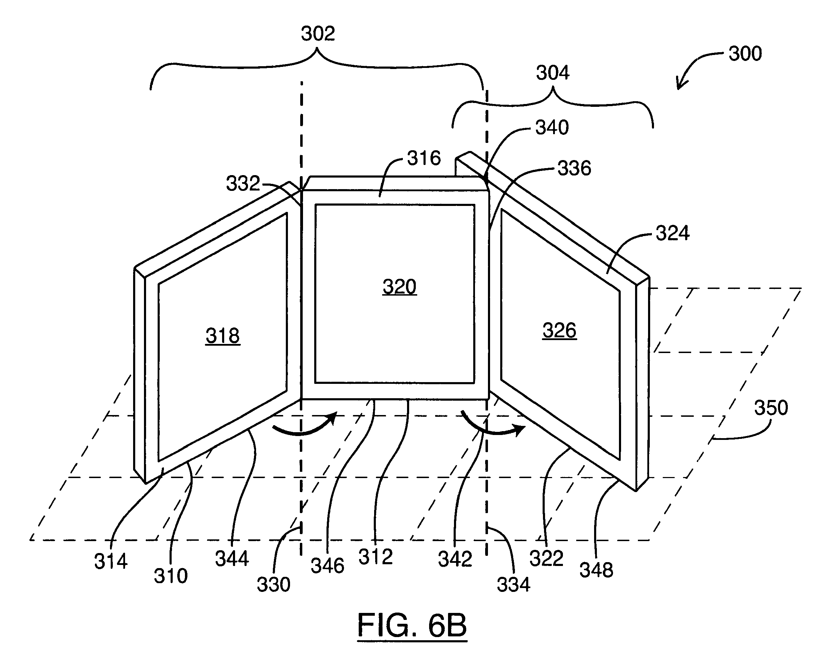

For example, **FIG. 6A** shows a perspective view of the mobile device **300** with the parts **310, 312, 322** folded inwardly. The first part **310** is foldably coupled to the second part **312** to allow the first part **310** to fold with respect to the second part **312** about a first folding axis **330.** At least one of the first portion **302** and the second portion **304** comprises one or more coupling elements configured so that the second part **312** is foldable with respect to the third part **322** about a second folding axis **334.**

Persons skilled in the art will understand that the first part **310** and the second part **312,** as well as any other parts disclosed herein as being foldably coupled, may be so coupled using one or more coupling elements as may be known in the art. For example, a hinge **332** may couple the first part **310** and the second part **312** and permit them to fold with respect to one another. In some embodiments, the first part **310** and the second part **312** may be joined by a flexible member (not shown), which is adapted to bend when the first and second parts **310, 312** fold with respect to one another. In some embodiments, the first part **310** and the second part **312** may be provided as a single liquid crystal display (LCD) or organic light emitting diode (OLED) display, which may cover a mechanical hinge coupling the first part **310** to the second part **312.** Accordingly, the first portion **302** may appear to provide one large screen that can flex so as to then appear to provide two separate screens. A hinge or other coupling element between the first part **310** and the second part **312** may be configured to allow the parts to fold relative to one another only up to a predetermined fold angle. Other coupling elements may be employed in variant embodiments.

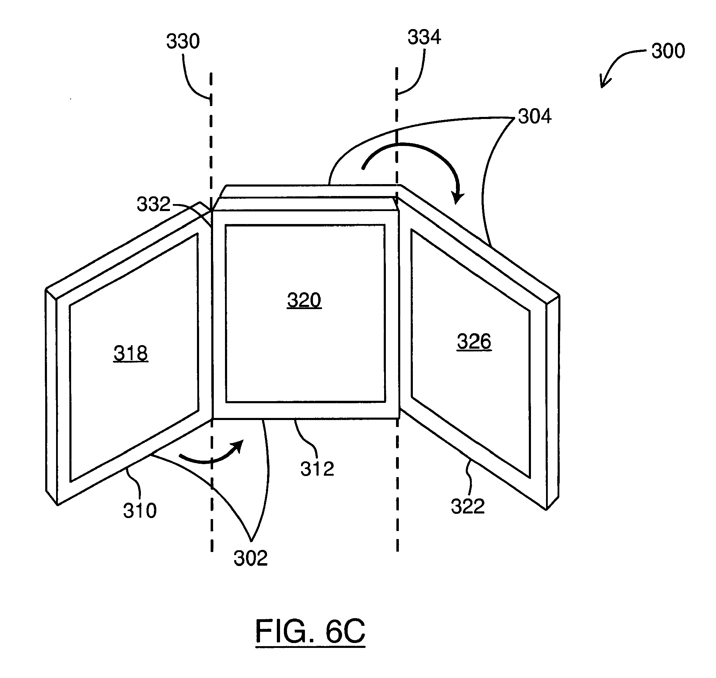

The second and third parts **312, 322** of the first portion **302** may be foldably coupled by a second hinge **336** in some embodiments. In one embodiment, as shown in **FIG. 6C****,** the second portion may comprise a hinge which is not connected to the first portion **302,** and which enables the third part **322** to fold with respect to itself and the first part **312.** A hinge or other coupling element between the second part **312** and the third part **322** may be configured to allow the parts to fold relative to one another only up to a predetermined fold angle.

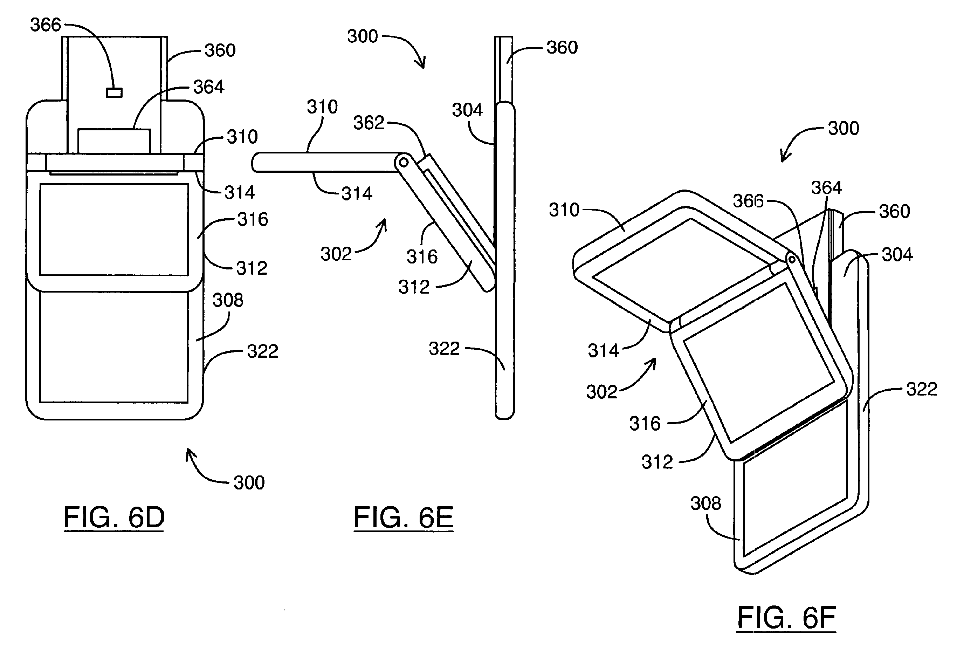

In other embodiments, the second and third parts **312, 322** may not be hingedly coupled, and other coupling mechanisms may be employed. For example, referring to **FIGS. 6D** to **6F****,** a top view, a right side view, and a perspective view of the mobile device **300** of which the parts **310, 312, 322** have been folded inwardly (e.g. as shown in **FIG. 6A**), in accordance with another embodiment, are shown. These figures depict a mobile device **300** that provides coupling elements on the second portion **304,** comprising a sliding portion **360** and a retractable arm **362.** The sliding portion **360** may comprise a slot **364** for receiving the arm **362** prior to the folding of parts **310, 312, 322** (as in **FIGS. 4A** and **5A**). One or more magnets **364** may be provided on the sliding portion **360** to hold the first portion **302** substantially flat against the second portion **304** prior to folding.

In use, first, when the mobile device **300** is in a first position where the first portion **302** has not been subject to sliding or folding relative to the second portion **304** (see e.g. **FIG. 4A**), the arm **362** settles in the slot **364** of the sliding portion **360** and may further slide into a cavity (not shown) provided underneath the screen **326** within the third part **322** for storage. The sliding portion **360** is stored within the second portion **304** and does not yet extend beyond the top edge of the second portion **304** (see e.g. **FIG. 4A**). Next, when the first portion **302** slides relative to the second portion **304** into a second position (see e.g. **FIG. 5A**), the arm **362** will move to occupy the end of the slot **364** towards the top end of the second portion **304.** The slot is dimensioned so as to permit the first portion **302** to slide relative to the second portion **304** in order to reveal the third screen **326,** but with the sliding portion **360** remaining stored within the second portion **304** such that it does not yet extend beyond the top edge of the second portion **304** (see e.g. **FIG. 5A**). Finally, to achieve the folding of the parts **310, 312, 322,** a further sliding of the first portion **302** may be performed, such that the sliding portion **360** extends from the top edge of the second portion **304** in order to release the arm **362.** The arm **362** is pivotally connected to the second portion **304** (or to the sliding portion **360**), allowing the end of the second part **312** closest to the first part **310** to be elevated, and causing the end of the second part **312** closest to the third part **322** to rest on the second portion **304** (a beveled edge may be provided on the second part **312** that rests on the second portion **304** in certain embodiments), as shown in **FIGS. 6E** and **6F****.** The first part **310** may be folded with respect to the second part **312** to achieve a third position (see e.g. **FIG. 6A**). Coupling elements may be employed and configured to hold each part in its place, in the first, second and/or third positions.

Other coupling mechanisms may be employed in variant embodiments.

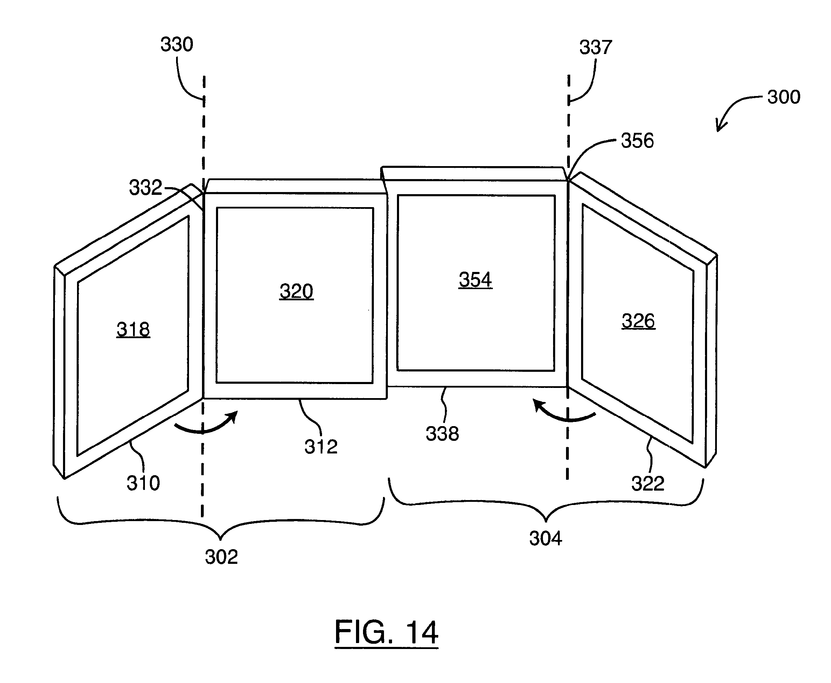

Persons skilled in the art will understand that the second part **312** and the third part **322** do not need to each comprise an edge directly aligned with a folding axis in order for them to fold with respect to one another about that folding axis. For example, as shown in **FIG. 14****,** the second part **312** is folded with respect to the third part **322** about a third folding axis **337** even though the second part **312** does not comprises an edge which is directly in line with the third folding axis **337.**

Some of the parts **310, 312, 322** may be configured to limit the maximum amount by which they may be folded with respect to the other parts **310, 312, 322.** For example, the second part **312** may provide a contact surface **340** configured to abut the third part **322** and to stop the second part **312** from folding about the second folding axis **334** with respect to the third part **322.** The size and shape of the contact surface **340** may be customized to stop the second part **312** from folding about the second folding axis **334** after a predetermined fold angle **342** between the second part **312** and the third part **322** is obtained. This may permit the second part **312** to be folded, with respect to the third part **322,** at a predetermined fold angle **342** quickly and accurately. Also, the predetermined fold angle **342** may be selected to provide an optimal viewing angle for the display screens **318, 320, 326,** when the mobile device **300** is to be used as a picture frame, for example.

For example, in the embodiment of **FIG. 6A****,** a beveled edge on the second part **312** comprises the contact surface **340.** In this embodiment, the shape and/or angle of the beveled edge may be designed to select a desired predetermined fold angle **342.**

In a variant embodiment, the second part **312** may provide a contact surface **340** configured to mate with an indent (not shown) in the second portion **304** and to stop the second part **312** from folding about the second folding axis **334** with respect to the third part **322,** after a predetermined fold angle **342** between the second part **312** and the third part **322** is obtained. The position and size of the indent and the contact surface **340** may be customized to selected a desired predetermined fold angle **342.**

The parts **310, 312, 322** may be folded to form a concave "U"-like shape, with the respective front surfaces **314, 316, 324** of the first, second and third parts **310, 312, 322** on the interior of the concave "U"-like shape, as shown in **FIG. 6A****,** for example. Persons skilled in the art will understand that references herein to a concave "U"-like shape do not require adjacent parts to be at right angles to each other. In one example, a "U"-like shape may comprise a concave shape with each interior angle being between 0 and 90 degrees exclusively. Each angle may be the same or different from the other angle(s).

When the first and second portions **302, 304** are positioned as shown in **FIGS. 4A** and **5A****,** the user may interact with the mobile device **300** using one or more of buttons (not shown), trackwheels (not shown), trackballs (not shown) or some other input device.

In at least one embodiment, one or more of the first, second and third display screens **318, 320, 326** may be touch screens adapted to receive touch screen input. For example, all three display screens **318, 320, 326** may be touch screens. In use, multiple applications may be executing on the mobile device **300,** and each display screen may be associated with a different application.

In one embodiment, a given touch screen may be configured to accept or to not accept touch screen inputs depending on the relative positions of the first and second portions **302, 304.** For example, when the first portion **302** is in the first position (**FIG. 4A**), one or both of the first and second display screens **318, 320** may be configured to accept touch screen inputs and the third display screen **326** may be configured to not accept touch screen inputs. When the first portion **302** is in the second position (**FIG. 5A**), the first and second display screens **318, 320** may be configured not to accept touch screen inputs and the third display screen **326** may be configured to accept touch screen inputs. The following table summarizes some of the possible ways the display screens **318, 320, 326** may be configured with respect to acceptance of touch screen inputs.

| First Position | | | Second Position | | |
|---|---|---|---|---|---|
| First display screen (**318**) | Second display screen (**320**) | Third display screen (**326**) | First display screen (**318**) | Second display screen (**320**) | Third display screen (**326**) |
| Accept | Accept | Not accept | Not accept | Not accept | Not accept |
| Accept | Accept | Not accept | Not accept | Not accept | Accept |
| Accept | Accept | Not accept | Not accept | Accept | Not accept |
| Accept | Accept | Not accept | Accept | Not accept | Not accept |
| Accept | Accept | Not accept | Not accept | Accept | Accept |
| Accept | Accept | Not accept | Accept | Not accept | Accept |
| Accept | Accept | Not accept | Accept | Accept | Not accept |
| Accept | Accept | Not accept | Accept | Accept | Accept |
| Accept | Not accept | Not accept | Not accept | Not accept | Not accept |
| Accept | Not accept | Not accept | Not accept | Not accept | Accept |
| Accept | Not accept | Not accept | Not accept | Accept | Not accept |
| Accept | Not accept | Not accept | Accept | Accept | Accept |
| Accept | Not accept | Not accept | Not accept | Accept | Accept |
| Accept | Not accept | Not accept | Accept | Not accept | Accept |
| Accept | Not accept | Not accept | Accept | Accept | Not accept |
| Accept | Not accept | Not accept | Accept | Not accept | Not accept |
| Not accept | Accept | Not accept | Not accept | Not accept | Not accept |
| Not accept | Accept | Not accept | Not accept | Not accept | Accept |
| Not accept | Accept | Not accept | Accept | Accept | Accept |
| Not accept | Accept | Not accept | Accept | Not accept | Not accept |
| Not accept | Accept | Not accept | Not accept | Accept | Accept |
| Not accept | Accept | Not accept | Accept | Not accept | Accept |
| Not accept | Accept | Not accept | Accept | Accept | Not accept |
| Not accept | Accept | Not accept | Not accept | Accept | Not accept |

As discussed above, the first portion **302** is configured to slide with respect to the second portion **304** in the slide direction **328.** The slide direction **328** may be perpendicular to one of the first folding axis **330** and the second folding axis **334.** After sliding, the parts **310, 312, 322** of the first and second portion **302, 304** may be folded, as shown in **FIG. 6A****,** for example. The mobile device **300** may then be rested on its side as shown. When oriented in this configuration, the device **300** may operate as a picture frame comprising multiple digital displays, for example. This may permit the mobile device **300** to take on different functionalities. For example, the mobile device **300** may be configured to operate as a mobile phone when the parts are not folded, and to operate as a picture frame (in a "digital picture frame mode") when the parts are folded and/or when the mobile device **300** is rested on its side. A different digital picture may be displayed in each display, for example. A clock showing the time may also be displayed in a display, for example.

In some embodiments, digital picture frame mode may be operated automatically, when the mobile device **300** is in the state of charging.

In certain implementations, the mobile device **300** may be operated when the parts are folded, with the mobile device resting on the underside of the second portion **304** upon a resting surface. In other words, the second portion **304** may act as a base, with the third display screen **326** accessible to receive user input (e.g. via virtual keys provided on the display screen **326**) and parallel to the resting surface (e.g. a table). Display screens **318, 320** may then be folded towards the user, in a manner similar to the way a laptop might be used, except two screens are provided to display output to the user.

In some embodiments, the mobile device **300** may comprise sensors, configured to detect when the mobile device is turned on its side and/or folded, and the mobile device **300** may use these sensors to determine when the mobile device **300** is to operate as a picture frame in the digital picture frame mode.

The mobile device **300** may be configured to enable or disable certain device functions when entering the digital picture frame mode. For example, when entering digital picture frame mode, the mobile device **300** may be configured to lock and disable phone functionality until the mobile device **300** is unlocked (e.g. upon a user entering a device password). This may permit a user to allow others to view the displayed pictures and to leave the mobile device **300** on their desk without risking that others will make unauthorized use of the mobile device **300.** In some variants, the display screens **318, 320, 326** may be configured to accept touch screen inputs in digital picture frame mode. This may permit the user to change photos displayed on one or more of the display screens **318, 320, 326** or to swap positions of the photos already displayed on the display screens **318, 320, 326** by swiping their finger, for example. In some embodiments, the display screens **318, 320, 326** may be configured to not accept touch screen inputs while the mobile device **300** is in digital picture frame mode. This may prevent a change of the photos being displayed without the authorization of the device owner or access to device functions, for example,

In at least one embodiment, at least two, of an edge **344** of the first part, an edge **346** of the second part and an edge **348** of the third part lie in the same plane **350** so that the mobile device **300** is stable and self-supporting when it is rested on a flat surface, for use as a picture frame, for example. In some variants, all three edges **346, 348, 350** may lie in the same plane **350.** When the mobile device **300** is placed on its side on a flat surface (e.g. for use as a picture frame), at least one of the first and second folding axes **330, 334** may be normal to the plane **350.** Persons skilled in the art will understand that to rest on a surface, only three discrete points or else a single planar surface of one or more of the edges **344, 346, 348** of the first, second and third parts **310, 312, 322** need to lie in the same plane **350.** In some embodiments, legs or feet (not shown) may be provided on one or more of the parts **310, 312, 322** to support the mobile device **300** when it is resting on its side.

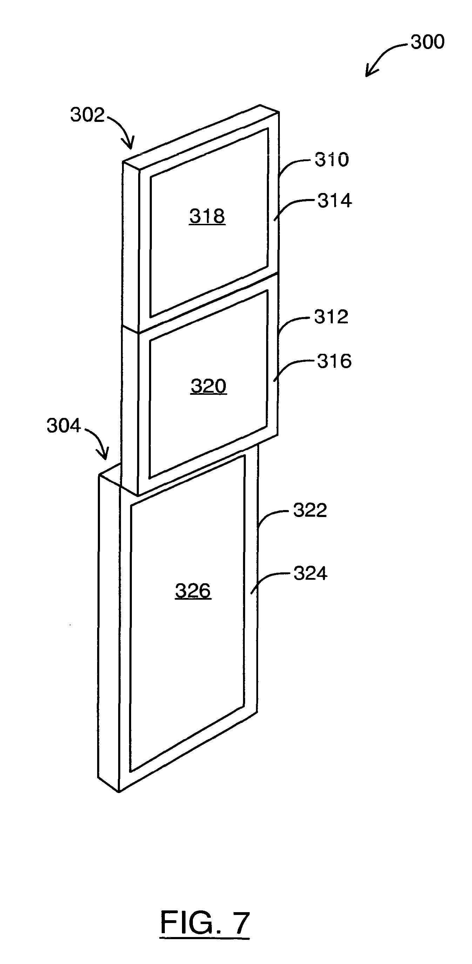

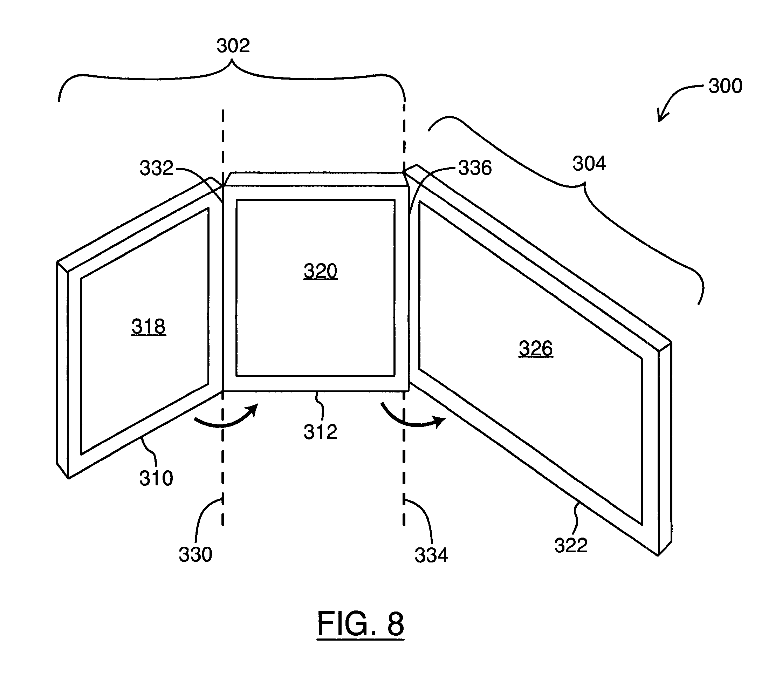

**FIGS. 7** and **8** show perspective views of the mobile device **300** with unequally display areas, in a variant embodiment. For example, **FIGS. 7** and **8** show an embodiment where the third display screen **326** provides a larger display area than each of the first display screen **318** and the second display screen **320.**

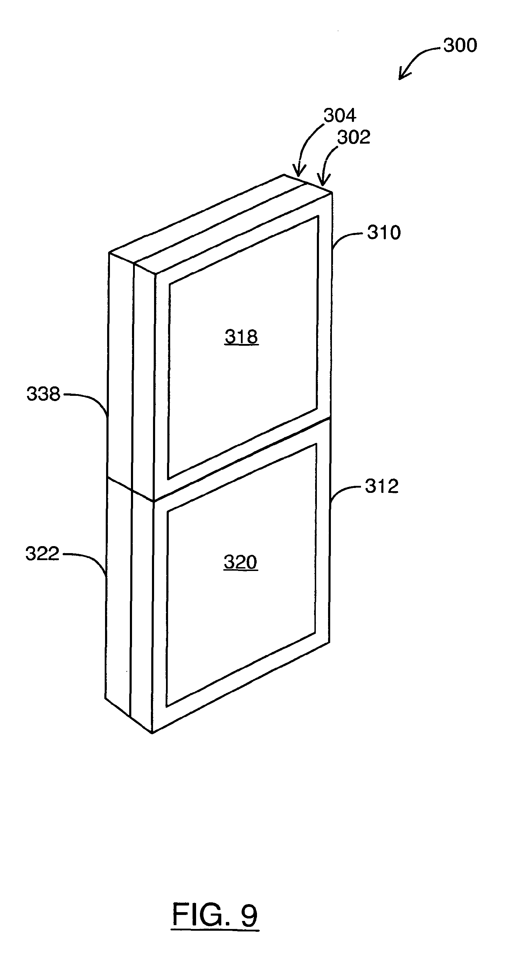

Referring now to **FIGS. 9** to **17****,** there are shown perspective views of the mobile device **300** having a second portion **304** with the fourth part **338,** according to at least one other embodiment. The fourth part **338** may comprise a front surface **352** on which a fourth display screen **354** is provided.

Details provided above with respect to the three-part mobile device may be applicable by extension to a four-part mobile device, such as that illustrated in **FIGS. 9** to **17****.** For example, details with respect to hinges, coupling elements, sliding mechanisms, digital picture frame modes, contact surfaces, touch screen inputs, alignment of edges, and sizing of parts and/or portions as previously described, may be extended to the four-part mobile device embodiments described below. The reader is directed to earlier parts of the description for details.

For example, embodiments of the mobile device **300** having four parts may be configured to operate as a mobile device when the parts are not folded, and to operate as a picture frame (e.g. in "digital picture frame mode") when at least some of the parts are folded relative to one another. As previously noted, the mobile device **300** may comprise sensors (not shown) configured to detect when the mobile device **300** is turned on its side and/or folded, and the mobile device **300** may use these sensors to determine when the mobile device **300** is to enter the digital picture frame mode.

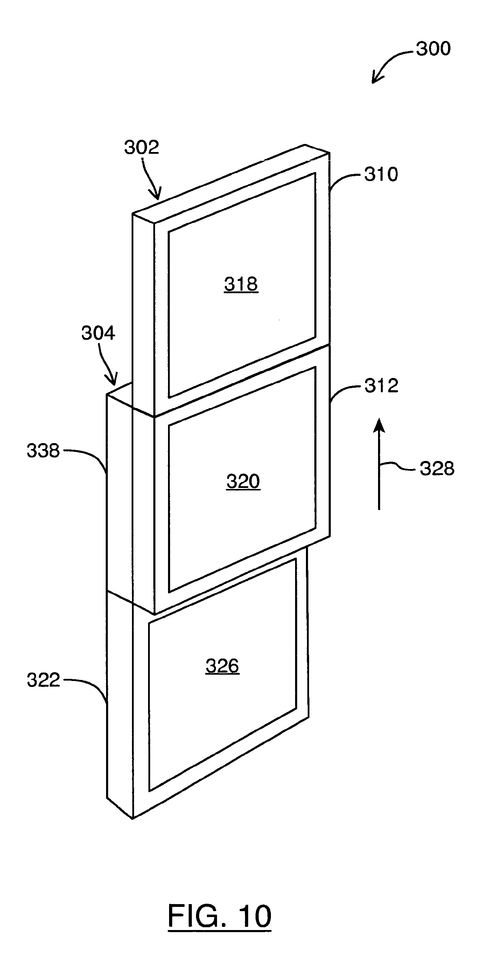

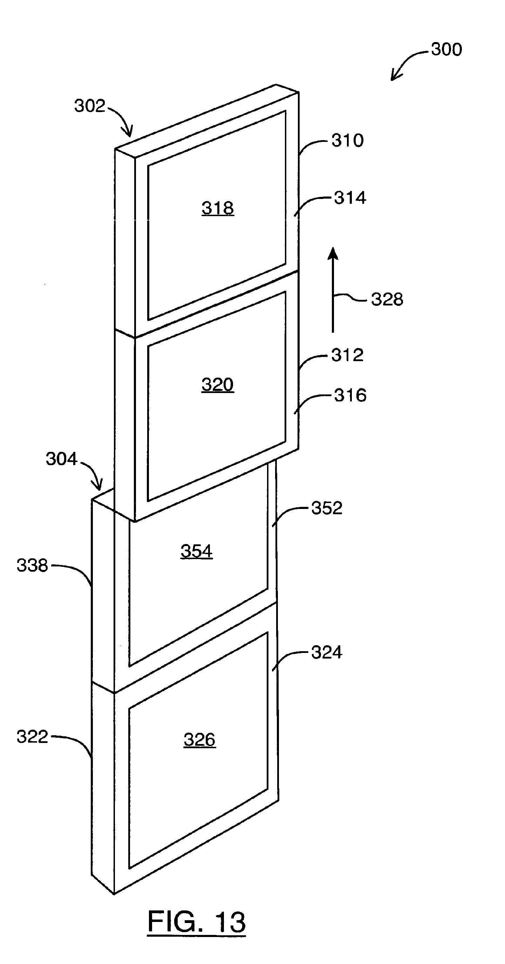

The first portion **302** is slidably coupled to the second portion **304** such that the first portion **302** can slide in a slide direction **328** to expose at least a part of the third display screen **326** (**FIG. 10**) or to expose at least a part of both the third and fourth display screens **326, 354** (**FIG. 13**). In the example shown in **FIG. 10****,** the third display screen **326** is fully exposed and in the example shown in **FIG. 13****,** both the third and fourth display screens **326, 354** are fully exposed.

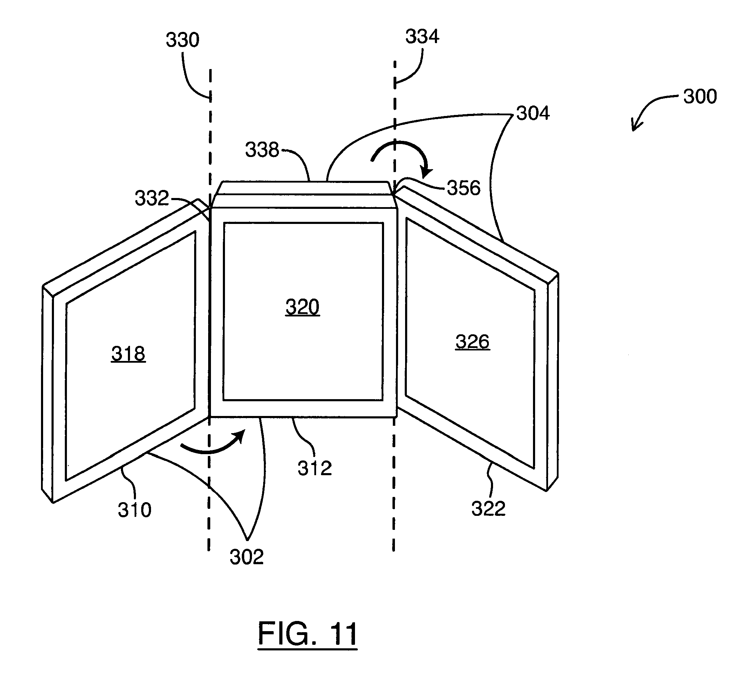

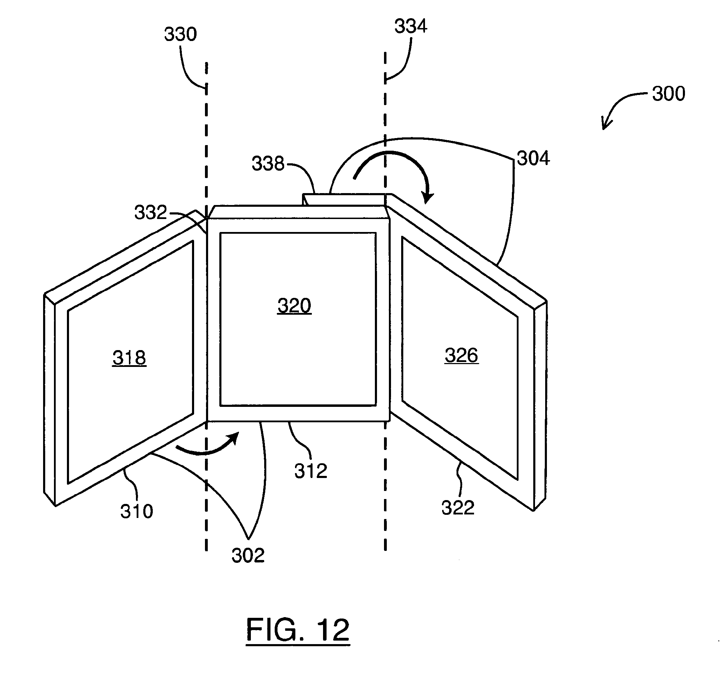

The first part **310** is foldably coupled to the second part **312** to allow the first part **310** to fold with respect to the second part **312** about the first folding axis **330** (see e.g. **FIGS. 11** and **12**). Further, at least one of the first portion **302** and the second portion **304** comprises one or more coupling elements configured so that the second part **312** is foldable with respect to the third part **322** about the second folding axis **334** (see e.g. **FIGS. 11** and **12**).

**FIG. 14** shows an embodiment where the first and second parts **310, 312** are foldably coupled to allow the first part **310** to rotate with respect to the second part **312** about the first folding axis **330.** Further, the third and fourth parts **322, 338** of the second portion **304** may comprise one or more coupling elements, which may be configured to permit the third part **322** to fold with respect to the second and fourth parts **312, 338.** In this embodiment, the second part 312 and the fourth part 338 may not be folded with respect to each other.

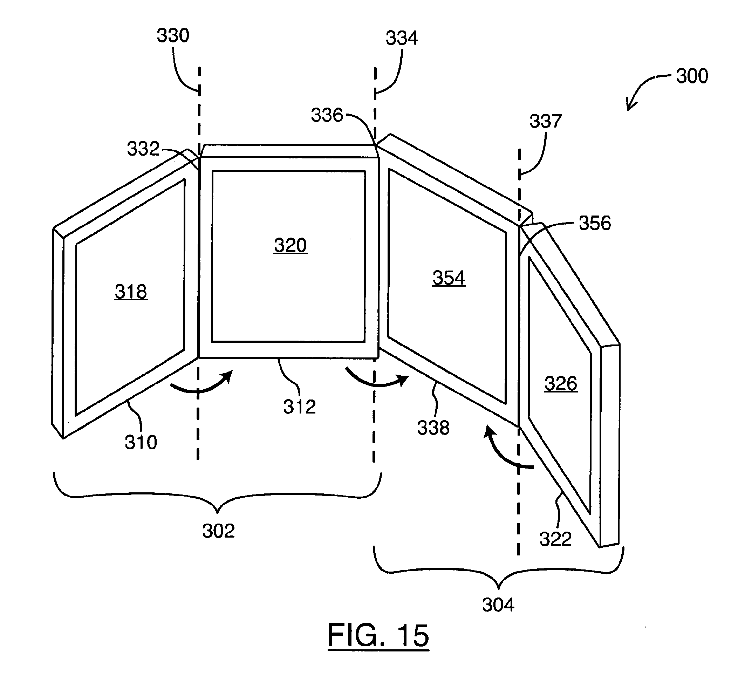

In another example, coupling elements between the second and fourth parts **312, 338** may be configured to permit both the third and fourth parts **322, 338** to fold with respect to the second part **312,** and the coupling elements between the third and fourth parts **322, 338** may be configured to permit the third part **322** to fold with respect to the second and fourth parts **312, 338,** as shown in **FIG. 15****.**

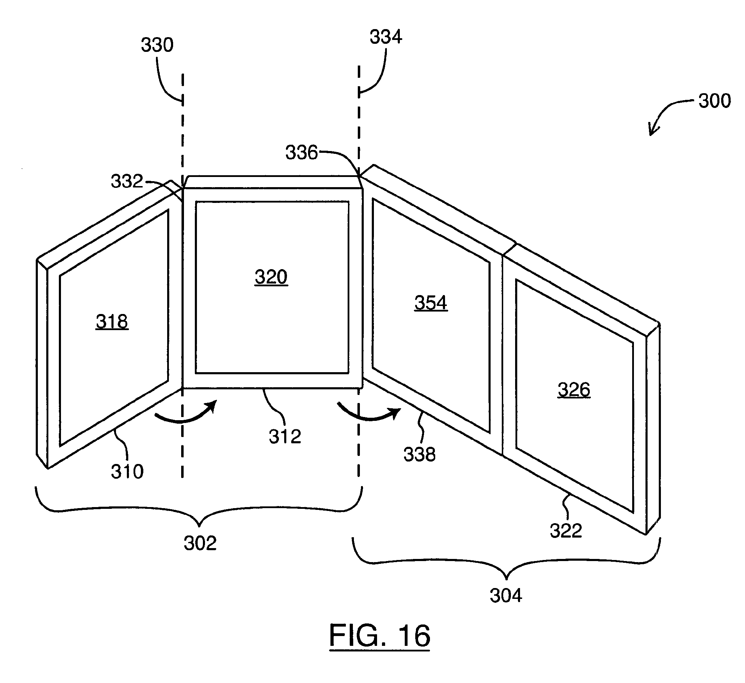

In another example, **FIG. 16** shows an embodiment where the second and the fourth parts **312, 338** are foldably coupled and may comprise the one or more coupling elements. In this example, the coupling elements may be configured to permit the third and fourth parts **322, 338** to fold with respect to the second part **312,** even where the third part **322** is not folded with respect the fourth part **338.**

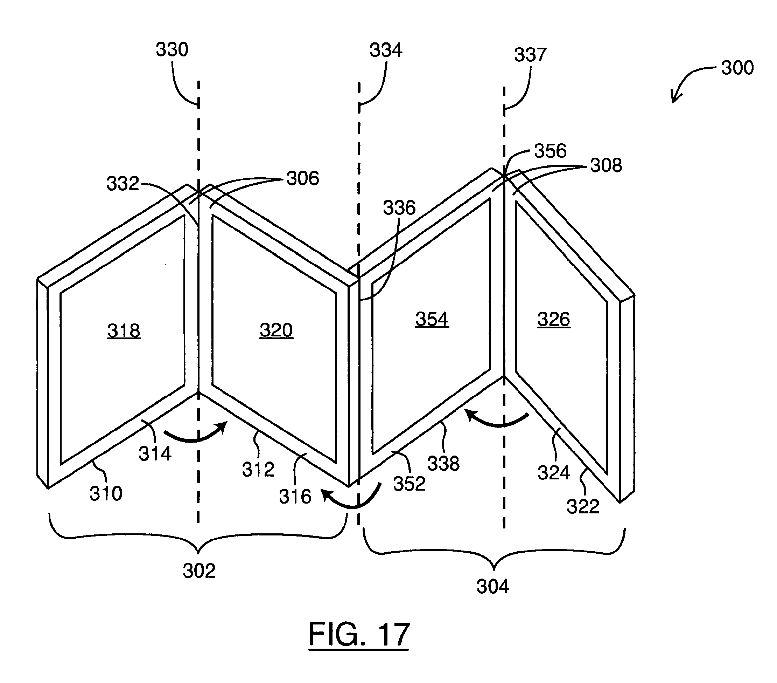

The parts disclosed herein as being foldably coupled may be configured to fold with respect to one another by the rotation of at least one part about a folding axis. Persons skilled in the art will understand that the rotation of the at least one part about a folding axis may be in one or both of a clockwise and a counterclockwise direction. For example, as shown in **FIG. 17****,** the first part **310** may be configured to fold with respect to the second part **312** about the first folding axis **330** such that the front surface **314** of the first part **310** moves towards the front surface **316** of the second part **312.** The second part **312** may be configured to fold with respect to the fourth part **338** about a second folding axis **334** such that the front surface **316** of the second part **312** moves away from the front surface **352** of the fourth part **338.** The third part **322** may be configured to fold with respect to the fourth part **338** about the third folding axis **337** such that the front surface **324** of the third part **322** moves towards the front surface **352** of the fourth part **338.** In this example embodiment, the respective front surfaces **314, 316, 324, 352** of the first, second, third and fourth parts **310, 312, 322, 338** may form a "W"-like shape, with the respective front surfaces **314, 316, 324, 352** on the interior of the "W"-like shape.

In variant embodiments, the first and second parts **310, 312** of the first portion **302** may not be foldably coupled while other parts, such as the second and fourth parts **312, 338** and/or the fourth and third parts **338, 322** may be foldably coupled.

In any of the above examples, the coupling elements may comprise one or more hinges **356, 334,** for example. In some embodiments, the first part **310** and the second part **312** may be joined by a flexible member (not shown), which is adapted to bend when the first and second parts **310, 312** fold with respect to one another. In some embodiments, the third part **322** and the fourth part **338** may be joined by a flexible member (not shown), which is adapted to bend when the third and fourth parts **322, 338** fold with respect to one another.

In some embodiments, the first part **310** and the second part **312** may be provided as a single liquid crystal display (LCD) or organic light emitting diode (OLED) display, which may cover a mechanical hinge coupling the first part **310** to the second part **312.** Accordingly, the first portion **302** may appear to provide one large screen that can flex so as to then appear to provide two separate screens. A hinge or other coupling element between the first part **310** and the second part **312** may be configured to allow the parts to fold relative to one another only up to a predetermined fold angle. In some embodiments, the third part **322** and the fourth part **338** may be provided as a single liquid crystal display (LCD) or organic light emitting diode (OLED) display, which may cover a mechanical hinge coupling the third part **322** to the fourth part **338.** Accordingly, the second portion **304** may appear to provide one large screen that can flex so as to then appear to provide two separate screens. A hinge or other coupling element between the third part **322** and the fourth part **312** may be configured to allow the parts to fold relative to one another only up to a predetermined fold angle.

Persons skilled in the art will understand that the various parts, front surfaces and display screens need not be equally sized. For example, as shown in the embodiment of **FIG. 12****,** the fourth part **338** is smaller than each of the other parts **310, 312, 322.** Further, the fourth display screen **354** and the front surface **352** of the fourth part **338** may be smaller than each of the other display screens **318, 320, 326** and front surfaces **314, 316, 324** respectively.

In variant embodiments, one or more of the parts **310, 312, 322, 338** may not comprise a display screen (not shown). The part may instead comprise a physical keyboard, a trackpad, or a slot for a physical picture to be inserted, for example.

In variant embodiments, the mobile device **300** may comprise more than four parts, such as five parts or six parts. Details provided above with respect to the three-part and four-part mobile device embodiments may be applicable by extension to a mobile device with a greater number of parts.

Although the Figures primarily depict the portions of the mobile device **300** and the parts thereof as generally four-sided in the embodiments described herein, it shall be understood that this is for ease of illustration only, and is not meant to limit the scope of the appended claims. For example, one or more corners of any portion **302, 304,** or of any part **310, 312, 322, 338** may not be square, and may be rounded and/or beveled, for example (see e.g. **FIGS. 6D** to **6F**). As a further example, one or more sides of any portion **302, 304,** or of any part **310, 312, 322, 338** may be curved and/or notched, in some implementations.

As used herein, the wording "and/or" is intended to represent an inclusive-or. For example "X and/or Y" is intended to mean X or Y or both. As a further example, "X, Y, and/or Z" is intended to mean X or Y or Z or any combination thereof.

A mobile device comprising a plurality of displays has been described with regard to a number of embodiments. However, it will be understood by persons skilled in the art that other variants and modifications may be made without departing from the scope of the disclosure as defined in the claims appended hereto.

## Claims

1. A mobile device *(300)* comprising:
a first portion *(302)* comprising a first part *(310)* providing at least a first display screen *(318),* and a second part *(312)* providing at least a second display screen *(320),* wherein the first part *(310)* is foldably coupled to the second part *(312)* to allow the first part *(310)* to fold with respect to the second part *(312)* about a first folding axis *(330);* and
a second portion *(304)* comprising a third part *(322)* providing at least a third display screen *(326);*
wherein the first portion *(302)* is slidably coupled to the second portion *(304)*; and
wherein at least one of the first portion *(302)* and the second portion *(304)* comprises one or more coupling elements *(336, 356)* configured so that the second part *(312)* of the first portion *(302)* is foldable with respect to the third part *(322)* of the second portion *(304)* about a second folding axis *(334).*

2. The mobile device of claim 1, wherein at least two of an edge *(344)* of the first part *(310),* an edge *(346)* of the second part *(312),* and an edge *(348)* of the third part *(322)* lie in a same plane *(350);* and wherein at least one of the first folding axis *(330)* and the second folding axis *(332)* is normal to the same plane *(350).*

3. The mobile device of claim 2, wherein the edge of the first part *(344),* the edge of the second part *(346),* and the edge of the third part *(348)* lie in the same plane *(350)*.

4. The mobile device of any one of the preceding claims, wherein the first portion *(302)* further comprises a hinge *(332)* that foldably couples the first part *(310)* to the second part *(312).*

5. The mobile device of any one of the preceding claims, wherein the one or more coupling elements *(336, 356)* comprises a hinge *(356)* that foldably couples the second part *(312)* of the first portion *(302)* to the third part *(322)* of the second portion *(304).*

6. The mobile device of any one of the preceding claims, wherein the second part *(312)* provides a contact surface *(340)* configured to abut the third part *(322)* and to stop the second part *(312)* from folding about the second folding axis *(334)* with respect to the third part *(322),* after a predetermined fold angle *(342)* between the second part *(312)* and the third part *(322)* is obtained.

7. The mobile device of claim 6, wherein the second part *(312)* provides a beveled edge; and wherein the beveled edge comprises the contact surface *(340).*

8. The mobile device of any one of claims 1 to 5, wherein the second part *(312)* provides a contact surface *(340)* configured to mate with an indent in the second portion *(304)* and to stop the second part *(312)* from folding about the second folding axis *(334)* with respect to the third part *(322),* after a predetermined fold angle *(342)* between the second part *(312)* and the third part *(322)* is obtained.

9. The mobile device of any of the preceding claims, wherein the first portion *(302)* is configured to slide relative to the second portion *(304)* between at least a first position and a second position; wherein in the first position, the third display screen *(326)* is covered by the first portion *(302)*; and wherein in the second position, the third display screen *(326)* is at least partially exposed by the first portion *(302).*

10. The mobile device of claim 9:
wherein each of the first part *(310),* the second part *(312),* and the third part *(322)* comprises a respective front surface *(314, 316, 324)*;
wherein the first display screen *(318)* is on the front surface *(314)* of the first part *(310),* the second display screen *(320)* is on the front surface *(316)* of the second part *(312),* and the third display screen *(326)* is on the front surface *(324)* of the third part *(322);*
wherein the first part *(310)* is configured to fold with respect to the second part *(312)* about the first folding axis *(330)* such that the front surface *(314)* of the first part *(310)* moves towards the front surface *(316)* of the second part *(312);* and
wherein the second part *(312)* is configured to fold with respect to the third part *(322)* about a second folding axis *(334)* in the second position such that the front surface *(316)* of the second part *(312)* moves towards the front surface *(324)* of the third part *(322).*

11. The mobile device of claim 10, wherein in the second position, the respective front surfaces *(314, 316, 324)* of the first, second and third parts *(310, 312, 322)* form a concave "U"-like shape, with the respective front surfaces *(314, 316, 324)* of the first, second and third parts *(310, 312*, *322)* on the interior of the concave "U"-like shape.

12. The mobile device of any one of the preceding claims, wherein the first portion *(302)* is configured to slide with respect to the second portion *(304)* in a slide direction *(328)*; and wherein the slide direction *(328)* is perpendicular to at least one of the first folding axis *(330)* and the second folding axis *(334).*

13. The mobile device of any one of the preceding claims, wherein the third display screen *(326)* provides a display area that is larger than a display area of each of the first display screen *(318)* and the second display screen *(320).*

14. The mobile device of claim 9, or any one of claims 10 to 13 when dependent on claim 9, wherein at least one of the first, second and third display screens *(318, 320, 326)* comprises a touch screen; and wherein at least one of the first, second and third display screens *(318, 320, 326)* is configured to accept touch screen input when the first portion *(302)* is in one of the first and second positions, but to not accept touch screen input when the first portion *(302)* is in one other of the first and second positions.

15. The mobile device of any one of the preceding claims, wherein each of the first portion *(302)* and the second portion *(304)* comprises a respective front surface *(306, 308),* and wherein the front surface *(306)* of the first portion *(302)* and the front surface *(308)* of the second portion *(304)* are substantially equal in area.

## Patentansprüche

1. Eine mobile Vorrichtung (300), die aufweist:
einen ersten Abschnitt (302), der einen ersten Teil (310) aufweist, der zumindest einen ersten Anzeigebildschirm (318) vorsieht, und einen zweiten Teil (312), der zumindest einen zweiten Anzeigebildschirm (320) vorsieht,
wobei der erste Teil (310) klappbar mit dem zweiten Teil (312) gekoppelt ist,
um zu ermöglichen, dass der erste Teil (310) in Bezug auf den zweiten Teil (312) um eine erste Klappachse (330) geklappt wird; und
einen zweiten Abschnitt (304), der einen dritten Teil (322) aufweist, der zumindest einen dritten Anzeigebildschirm (326) vorsieht;
wobei der erste Abschnitt (302) verschiebbar mit dem zweiten Abschnitt (304) gekoppelt ist; und
wobei zumindest einer des ersten Abschnitts (302) und des zweiten Abschnitts (304) ein oder mehrere Koppelelement(e) (336, 356) aufweist,
derart konfiguriert, dass der zweite Teil (312) des ersten Abschnitts (302) in Bezug auf den dritten Teil (322) des zweiten Abschnitts (304) um eine zweite Klappachse (334) klappbar ist.

2. Die mobile Vorrichtung gemäß Anspruch 1, wobei zumindest zwei eines Rands (344) des ersten Teils (310), eines Rands (346) des zweiten Teils (312), und eines Rands (348) des dritten Teils (322) in einer selben Ebene (350) liegen; und wobei zumindest eine der ersten Klappachse (330) und der zweiten Klappachse (332) normal zu derselben Ebene (350) ist.

3. Die mobile Vorrichtung gemäß Anspruch 2, wobei der Rand des ersten Teils (344), der Rand des zweiten Teils (346) und der Rand des dritten Teils (348) in derselben Ebene (350) liegen.

4. Die mobile Vorrichtung gemäß einem der vorhergehenden Ansprüche, wobei der erste Abschnitt (302) weiter ein Gelenk (332) aufweist, das den ersten Teil (310) mit dem zweiten Teil (312) klappbar koppelt.

5. Die mobile Vorrichtung gemäß einem der vorhergehenden Ansprüche, wobei das eine oder mehrere Koppelelement(e) (336, 356) ein Gelenk (356) aufweist/aufweisen, das den zweiten Teil (312) des ersten Abschnitts (302) mit dem dritten Teil (322) des zweiten Abschnitts (304) klappbar koppelt.

6. Die mobile Vorrichtung gemäß einem der vorhergehenden Ansprüche, wobei der zweite Teil (312) eine Kontaktfläche (340) vorsieht, die konfiguriert ist, an den dritten Teil (322) anzugrenzen und den zweiten Teil (312) zu hindern, um die zweite Klappachse (334) in Bezug auf den dritten Teil (322) zu klappen, nachdem ein vorgegebener Klappwinkel (342) zwischen dem zweiten Teil (312) und dem dritten Teil (322) erlangt wird.

7. Die mobile Vorrichtung gemäß Anspruch 6, wobei der zweite Teil (312) einen abgeschrägten Rand vorsieht; und wobei der abgeschrägte Rand die Kontaktfläche (340) aufweist.

8. Die mobile Vorrichtung gemäß einem der Ansprüche 1 bis 5, wobei der zweite Teil (312) eine Kontaktfläche (340) vorsieht, die konfiguriert ist, mit einer Kerbe in dem zweiten Abschnitt (304) in Kontakt zu kommen und den zweiten Teil (312) zu hindern, um die zweite Klappachse (334) in Bezug auf den dritten Teil (322) zu klappen, nachdem ein vorgegebener Klappwinkel (342) zwischen dem zweiten Teil (312) und dem dritten Teil (322) erlangt wird.

9. Die mobile Vorrichtung gemäß einem der vorhergehenden Ansprüche, wobei der erste Abschnitt (302) konfiguriert ist, relativ zu dem zweiten Abschnitt (304) zwischen zumindest einer ersten Position und einer zweiten Position verschoben zu werden; wobei in der ersten Position der dritte Anzeigebildschirm (326) durch den ersten Abschnitt (302) abgedeckt ist; und wobei in der zweiten Position der dritte Anzeigebildschirm (326) zumindest teilweise durch den ersten Abschnitt (302) exponiert ist.

10. Die mobile Vorrichtung gemäß Anspruch 9:
wobei jeder des ersten Teils (310), des zweiten Teils (312) und des dritten Teils (322) eine jeweilige Vorderseite (314,316,324) aufweist;
wobei der erste Anzeigebildschirm (318) auf der Vorderseite (314) des ersten Teils (310) ist, der zweite Anzeigebildschirm (320) auf der Vorderseite (316) des zweiten Teils (312) ist, und der dritte Anzeigebildschirm (326) auf der Vorderseite (324) des dritten Teils (322) ist;
wobei der erste Teil (310) konfiguriert ist, in Bezug auf den zweiten Teil (312) um die erste Klappachse (330) zu klappen derart, dass sich die Vorderseite (314) des ersten Teils (310) zu der Vorderseite (316) des zweiten Teils (312) bewegt; und
wobei der zweite Teil (312) konfiguriert ist, in Bezug auf den dritten Teil (322) um eine zweite Klappachse (334) in der zweiten Position zu klappen derart, dass sich die Vorderseite (316) des zweiten Teils (312) zu der Vorderseite (324) des dritten Teils (322) bewegt.

11. Die mobile Vorrichtung gemäß Anspruch 10, wobei, in der zweiten Position, die jeweiligen Vorderseiten (314,316,324) der ersten, zweiten und dritten Teile (310,312,322) eine konkave "U"-Form bilden, wobei die jeweiligen Vorderseiten (314,316,324) der ersten, zweiten und dritten Teile (310,312, 322) auf der Innenseite der konkaven "U"-Form sind.

12. Die mobile Vorrichtung gemäß einem der vorhergehenden Ansprüche, wobei der erste Abschnitt (302) konfiguriert ist, in Bezug auf den zweiten Abschnitt (304) in eine Verschiebungsrichtung (328) verschoben zu werden; und wobei die Verschiebungsrichtung (328) senkrecht ist zu zumindest einer der ersten Klappachse (330) und der zweite Klappachse (334).

13. Die mobile Vorrichtung gemäß einem der vorhergehenden Ansprüche, wobei der dritte Anzeigebildschirm (326) einen Anzeigebereich vorsieht, der größer ist als ein Anzeigebereich jedes des ersten Anzeigebildschirms (318) und des zweiten Anzeigebildschirms (320).

14. Die mobile Vorrichtung gemäß Anspruch 9, oder einem der Ansprüche 10 bis 13, wenn abhängig von Anspruch 9, wobei zumindest einer der ersten, zweiten und dritten Anzeigebildschirme (318, 320, 326) einen Berührungsbildschirm aufweist; und wobei zumindest einer der ersten, zweiten und dritten Anzeigebildschirme (318, 320, 326) konfiguriert ist, eine Berührungsbildschirm-Eingabe anzunehmen, wenn der erste Abschnitt (302) in einer der ersten und zweiten Positionen ist, aber die Berührungsbildschirm-Eingabe nicht anzunehmen, wenn der erste Abschnitt (302) in der anderen der ersten und der zweiten Position ist.

15. Die mobile Vorrichtung gemäß einem der vorhergehenden Ansprüche, wobei jeder des ersten Abschnitts (302) und des zweiten Abschnitts (304) eine jeweilige Vorderseite (306, 308) aufweist, und wobei die Vorderseite (306) des ersten Abschnitts (302) und die Vorderseite (308) des zweiten Abschnitts (304) in der Fläche im Wesentlichen gleich sind.

## Revendications

1. Dispositif mobile (300) comprenant :
une première partie (302) comprenant une première pièce (310) fournissant au moins un premier écran d'affichage (318), et une deuxième pièce (312) fournissant au moins un deuxième écran d'affichage (320), dans lequel la première pièce (310) est accouplée à la deuxième pièce (312) de façon repliable pour permettre à la première pièce (310) de se replier par rapport à la deuxième pièce (312) autour d'un premier axe (330) de pliage ; et
une seconde partie (304) comprenant une troisième pièce (322) fournissant au moins un troisième écran d'affichage (326),
dans lequel la première partie (302) est accouplée de manière coulissante à la seconde partie (304), et
dans lequel au moins l'une de la première partie (302) et de la seconde partie (304) comprend un ou plusieurs éléments d'accouplement (336, 356) constitués de façon que la deuxième pièce (312) de la première partie (302) soit repliable par rapport à la troisième pièce (322) de la seconde partie (304) autour d'un second axe (334) de pliage.

2. Dispositif mobile selon la revendication 1, dans lequel au moins un bord (344) de la première pièce (310), un bord (346) de la deuxième pièce (312) et un bord (348) de la troisième pièce (322) se trouvent dans un même plan (350) ; et dans lequel au moins l'un du premier axe (330) de pliage et du second axe (332) de pliage est perpendiculaire à ce même plan (350).

3. Dispositif mobile selon la revendication 2, dans lequel le bord de la première pièce (344), le bord de la deuxième pièce (346) et le bord de la troisième pièce (348) se trouvent dans le même plan (350).

4. Dispositif mobile selon l'une quelconque des revendications précédentes, dans lequel la première partie (302) comprend en outre une charnière (332) qui accouple de façon repliable la première pièce (310) à la deuxième pièce (312).

5. Dispositif mobile selon l'une quelconque des revendications précédentes, dans lequel les un ou plusieurs éléments d'accouplement (336, 356) comprennent une charnière (356) qui accouple de façon repliable la deuxième pièce (312) de la première partie (302) à la troisième pièce (322) de la seconde partie (304).

6. Dispositif mobile selon l'une quelconque des revendications précédentes, dans lequel la deuxième pièce (312) présente une surface de contact (340) constituée pour buter contre la troisième pièce (322) et pour empêcher la deuxième pièce (312) de se replier autour du second axe (334) de pliage par rapport à la troisième pièce (322), après qu'un angle prédéterminé (342) de pliage entre la deuxième pièce (312) et la troisième pièce (322) a été obtenu.

7. Dispositif mobile selon la revendication 6, dans lequel la deuxième pièce (312) présente un bord biseauté, et dans lequel le bord biseauté comprend la surface de contact (340).

8. Dispositif mobile selon l'une quelconque des revendications 1 à 5, dans lequel la deuxième pièce (312) présente une surface de contact (340) constituée pour correspondre à une indentation de la seconde partie (304) et pour empêcher la deuxième pièce (312) de se replier autour du second axe (334) de pliage par rapport à la troisième pièce (322), après qu'un angle prédéterminé (342) de pliage entre la deuxième pièce (312) et la troisième pièce (322) a été obtenu.

9. Dispositif mobile selon l'une quelconque des revendications précédentes, dans lequel la première partie (302) est constituée pour coulisser par rapport à la seconde partie (304) entre au moins une première position et une seconde position, dans lequel, dans la première position, le troisième écran d'affichage (326) est couvert par la première partie (302), et dans lequel, dans la seconde position, le troisième écran d'affichage (326) est au moins partiellement découvert par la première partie (302).

10. Dispositif mobile selon la revendication 9,
dans lequel chacune de la première pièce (310), de la deuxième pièce (312) et de la troisième pièce (322) comprend une face frontale respective (314, 316, 324),
dans lequel le premier écran d'affichage (318) se trouve sur la face frontale (314) de la première pièce (310), le deuxième écran d'affichage (320) se trouve sur la face frontale (316) de la deuxième pièce (312) et le troisième écran d'affichage (326) se trouve sur la face frontale (324) de la troisième pièce (322),
dans lequel la première pièce (310) est constituée pour se replier par rapport à la deuxième pièce (312) autour du premier axe (330) de pliage de façon que la face frontale (314) de la première pièce (310) se déplace vers la face frontale (316) de la deuxième pièce (312), et
dans lequel la deuxième pièce (312) est constituée pour se replier par rapport à la troisième pièce (322) autour d'un second axe (334) de pliage dans la seconde position de façon que la face frontale (316) de la deuxième pièce (312) se déplace vers la face frontale (324) de la troisième pièce (322).

11. Dispositif mobile selon la revendication 10, dans lequel, dans la seconde position, les faces frontales respectives (314, 316, 324) des première, deuxième et troisième pièces (310, 312, 322) forment une configuration concave du type en "U", avec les faces frontales respectives (314, 316, 324) des première, deuxième et troisième pièces (310, 312, 322) sur l'intérieur de la configuration concave du type en "U".

12. Dispositif mobile selon l'une quelconque des revendications précédentes, dans lequel la première partie (302) est constituée pour coulisser par rapport à la seconde partie (304) dans une direction (328) de coulissement, et dans lequel la direction (328) de coulissement est perpendiculaire à au moins l'un du premier axe (330) de pliage et du second axe (334) de pliage.

13. Dispositif mobile selon l'une quelconque des revendications précédentes, dans lequel le troisième écran d'affichage (326) présente une superficie d'affichage qui est plus grande que la superficie d'affichage de chacun du premier écran d'affichage (318) et du deuxième écran d'affichage (320).

14. Dispositif mobile selon la revendication 9, ou l'une quelconque des revendications 10 à 13 lorsqu'elles dépendent de la revendication 9, dans lequel au moins l'un des premier, deuxième et troisième écrans d'affichage (318, 320, 326) comprend un écran tactile, et dans lequel au moins l'un des premier, deuxième et troisième écrans d'affichage (318, 320, 326) est constitué pour accepter une entrée d'écran tactile lorsque la première partie (302) est dans l'une des première et seconde positions, mais pour ne pas accepter d'entrée d'écran tactile lorsque la première partie (302) est dans l'autre des première et seconde positions.

15. Dispositif mobile selon l'une quelconque des revendications précédentes, dans lequel chacune de la première partie (302) et de la seconde partie (304) comprend une face frontale respective (306, 308), et dans lequel la face frontale (306) de la première partie (302) et la face frontale (308) de la seconde partie (304) sont pratiquement égales en superficie.
